(19) Europäisches Patentamt
European Patent Office
Office européen des brevets

(11) Veröffentlichungsnummer: **0 014 189**
**B1**

(12) # EUROPÄISCHE PATENTSCHRIFT

(45) Veröffentlichungstag der Patentschrift: **27.10.82**

(51) Int. Cl.³: **C 01 F 11/46,** C 01 G 49/06

(21) Anmeldenummer: **80890003.9**

(22) Anmeldetag: **14.01.80**

(54) **Verfahren zur Aufarbeitung von Eisen-II-Sulfat-heptahydrat.**

(30) Priorität: **24.01.79 AT 514/79**

(43) Veröffentlichungstag der Anmeldung:
**06.08.80 Patentblatt 80/16**

(45) Bekanntmachung des Hinweises auf die Patenterteilung:
**27.10.82 Patentblatt 82/43**

(84) Benannte Vertragsstaaten:
**BE CH DE GB LU NL SE**

(56) Entgegenhaltungen:
**BE-A-643 142**
**FR-A-2 318 826**
**FR-A-2 329 592**
**GB-A-993 115**
**US-A-2 197 003**

(73) Patentinhaber: **VOEST-ALPINE Aktiengesellschaft, Friedrichstrasse 4, A-1011 Wien (AT)**

(72) Erfinder: **Ludewig, Fritz, Dr., Lorberaustrasse 13, D-8704-Leoben (DE)**

(74) Vertreter: **Kretschmer, Adolf, Dipl.-Ing., Schottengasse 3a, A-1014 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Verfahren zur Aufarbeitung von Eisen-II-Sulfat-heptahydrat

Die Erfindung bezieht sich auf ein Verfahren zur Aufarbeitung von Eisen-II-Sulfat-heptahydrat durch Umsetzung mit $CaCl_2$ zu Rohgips, bei welchem die nach der Fällung des Rohgipses erhaltene schwach HCl-saure, überschüssiges $CaCl_2$ enthaltende $FeCl_2$-Lösung im Anschluß an die Fällung des Rohgipses mit gebranntem Kalk oder $CaCO_3$ versetzt wird, worauf mittels gasförmigem Sauerstoff, insbesondere Luft, Fe II zumindest teilweise zu Fe III oxydiert wird, die ausgefallenen Eisenoxydhydrate abgetrennt und das gebildete $CaCl_2$ im Kreislauf geführt wird. Beim Beizen von unlegierten Stählen mit Schwefelsäure entsteht im Beizbad im Verlaufe des Beizprozesses Eisensulfat, welches aus dem Beizbad entfernt werden muß, da es den Beizprozeß nicht mehr unterhält.

Die Entfernung des Eisensulfates erfolgt in der Weise, daß man dem Beizbad kontinuierlich einen Teil der eisenhaltigen Beizlösung entzieht, diese Lösung, deren Temperatur zwischen 80 und 90°C liegt, auf Umgebungstemperatur oder tiefer abkühlt und so den größten Teil des gelösten Eisen-II-Sulfates in Form seines Heptahydrates zur Ausscheidung bringt.

Das auskristallisierte Eisen-II-Sulfatheptahydrat wird mittels Siebschleudern von der eisenarmen Mutterlösung abgetrennt. Letztere wird mit der erforderlichen Menge an konzentrierter Schwefelsäure und Wasser versetzt und hierauf mit der unbehandelten Hauptmenge der Beizlösung vereinigt.

Die Weiterverarbeitung des abgeschiedenen Eisen-II-Sulfatheptahydrates stellt insofern ein Problem dar, als die genannte Verbindung nur in sehr geringem Umfang unmittelbar verwendet werden kann und eine Deponie auf Müllhalden infolge der Wasserlöslichkeit nicht möglich ist.

Bei den Möglichkeiten, Eisen-II-Sulfatheptahydrat auf chemischem Wege weiter zu verarbeiten, handelt es sich im wesentlichen um Regenerationsprozesse und um sogenannte »Vernichtungsprozesse«. Bei ersteren gewinnt man aus Eisensulfat Eisenoxid und Schwefelsäure zurück, während bei letzteren Eisensulfat durch entsprechende chemische Umsetzungen in ein Stoffgemenge umgewandelt wird, welches auf Müllhalden gekippt werden kann. Totalregenerationsanlagen sind sehr kostenaufwendig und daher wird Eisen-II-Sulfatheptahydrat nur dann durch Totalregeneration aufgearbeitet, wenn große Mengen dieser Verbindung (von einigen tausend Monatstonnen aufwärts) aufgearbeitet werden müssen. Aber auch bei so großen Stoffdurchsätzen arbeiten die Regenerationsanlagen beim gegenwärtigen Preis der technischen Schwefelsäure nicht annähernd kostendeckend. In Anbetracht dieser Tatsache wird Eisen-II-Sulfatheptahydrat, wenn man von der Abröstung auf dem Sinterband und dem Abtransport in das Meer absieht, durch Umsetzung mit gebranntem Kalk in ein unschädliches lagerungsfähiges Stoffgemenge, bestehend aus Eisenoxid und Kalziumsulfat, überführt.

Diese Umsetzung, auch Trocken- oder Thermoneutralisation genannt, läßt sich in relativ einfachen Vorrichtungen ohne jegliche Energiezufuhr mit ausreichend hoher Geschwindigkeit durchführen. Technische Verwendung hat das dabei erhältliche Reaktionsprodukt allerdings noch nicht gefunden.

Anstelle von gebranntem Kalk kann, wie in der DE-A-2223 980 beschrieben, auch mehlfeiner Karbonatkalk verwendet werden. Die Umsetzung von Heptahydrat mit Karbonatkalk erfolgt aber im Gegensatz zur Umsetzung mit gebranntem Kalk erst im Temperaturbereich von $550 \pm 20$°C mit der gewünschten Geschwindigkeit und Vollständigkeit. Da die Reaktionsenthalpie bei der Umsetzung mit Karbonatkalk aber nicht ausreicht, um die angegebene optimale Reaktionstemperatur aufrechtzuerhalten, ist es notwendig, das Reaktionsgut mittels einer Gas- oder Ölbefeuerung auf die oben angeführte Temperatur aufzuheizen. Bei der Umsetzung von Heptahydrat mit Karbonatkalk entsteht ebenso wie bei der Trockenneutralisation mit gebranntem Kalk ein zwar lagerungsfähiges, aber technisch nicht nutzbares Gemenge aus Eisenoxid und Anhydrit ($CaSO_4$).

Diese beiden Stoffe würden aber, wenn sie getrennt und jeweils in hoher Reinheit vorliegen würden, uneingeschränkte technische Verwendung finden.

Es ist weiterhin bereits bekannt, Eisen-II-Sulfat-heptahydrat mit $CaCl_2$ umzusetzen, wobei $CaSO_4$ und $FeCl_2$ erhalten wird. Dieser Vorschlag, welcher der GB-A-993 115 entnommen werden kann, beseitigt eine Reihe der eingangs genannten Nachteile, jedoch wird bei diesem bekannten Verfahren vorgeschlagen, das Eisenchlorid zu Eisenoxid zu hydrolisieren. Ein derartiges Verfahren, welches gesonderte Apparaturen voraussetzt und nur als Sprühröstverfahren durchführbar ist, erfordert hohe Temperaturen und ist daher energieaufwendig.

Das eingangs genannte Verfahren stellt diesbezüglich eine Verbesserung dar und ist der BE-A-643 142 zu entnehmen. Bei diesem bekannten Verfahren erfolgt die Umsetzung des gebildeten $FeCl_2$ mit gebranntem oder gelöschtem Kalk, wodurch $CaCl_2$ regeneriert wird und im Kreislauf geführt werden kann. Nachteilig bei diesem bekannten Verfahren ist lediglich die noch unzureichende Reinheit des abgetrennten Kalziumsulfats.

Die Erfindung zielt nun darauf ab, dieses bekannte Verfahren dahingehend zu vervollkommnen und zu verbessern, daß der gebildete Gips in hoher Reinheit erhalten werden kann. Zur Lösung dieser Aufgabe besteht die Erfindung im wesentlichen darin, daß die nach dem Ausfällen von FeO(OH) weitgehend eisenfreie $CaCl_2$-Lösung abgetrennt wird und der Rohgips durch Versetzen mit dieser eisenfreien $CaCl_2$-Lösung gereinigt wird und daß die nach der Reinigung des Rohgipses

Fe-II-chloridhaltige $CaCl_2$-Lösung zur Rohgipsfällung eingesetzt wird. Für die Fällung von Gips ist eine Verunreinigung des $CaCl_2$ durch Fe-II-Chlorid von untergeordneter Bedeutung und die Reinigung des gefällten Gipses durch weitgehend eisenfreie $CaCl_2$-Lösung führt zu einem Endprodukt mit hoher Reinheit. Die Umsetzung der $FeCl_2$-Lösung mit gebranntem Kalk geht auch bei niedrigen Temperaturen hinlänglich rasch vor sich, um technisch interessant zu sein. Bei Verwendung von Kalziumkarbonat ist es vorteilhaft, Sauerstoff unter Druck, insbesondere unter 8 bis 12 bar, vorzugsweise 10 bar, einzupressen, um eine hinlänglich große Reaktionsgeschwindigkeit zu erzielen. Hierbei wird in vorteilhafter Weise $CaCo_3$ mit einer Korngröße von Maximal 0,5, vorzugsweise maximal 0,1 mm, eingesetzt.

In vorteilhafter Weise wird die Zufuhr des Eisen-II-Sulfat-heptahydrats zur Kalziumchloridlösung noch vor der restlosen Umsetzung des Kalziumchlorids unterbrochen, so daß zur Fällung des Rohgipses $CaCl_2$ in überstöchiometrischer Menge eingesetzt wird. Zur Vermeidung der Mitausfällung von schwerlöslichen basischen Eisen-III-Verbindungen, die sich bei der Ausfällung von Gips aus neutraler, Eisen-III-Salze enthaltender Eisen-II-Sulfatlösung bilden können, führt man sowohl die Rohgipsfällung als auch die Umkristallisation des Rohgipses in schwach salzsauren Lösungen durch. In vorteilhafter Weise wird dem Luft- oder Sauerstoffstrom Chlor zugesetzt, um Fe-II zu Fe-III zumindest teilweise mit hinreichender Geschwindigkeit zu oxydieren. Gleichzeitig dient der Chlorzusatz zur Kompensation von $CaCl_2$-Verlusten beim Austragen von Gips und FeO(OH) aus den $CaCl_2$-haltigen Lösungen.

Die restlose Aufoxydation von $Fe(OH)_2$ zu FeO(OH) mit Chlor ist theoretisch interessant, weil die Löslichkeit von FeO(OH) gegenüber $Fe(OH)_2$ um den Faktor $10^4$ kleiner ist und weil dadurch praktisch eisenfreie Kalziumchloridlösungen, so wie sie für die beschriebene Reinigung des Rohgipses von Vorteil ist, erzielt werden können. Mit Rücksicht auf die bessere Filterbarkeit von 10 bis 30%, vorzugsweise 20%, magnetische Oxydhydrate enthaltenden Eisenoxydhydratniederschlägen hat es sich jedoch als vorteilhaft herausgestellt, die Oxydation von Fe II zu Fe III nicht quantitativ zu führen. Auf diese Weise wird ein leicht abtrennbarer Niederschlag erhalten, wobei dennoch eine hinreichende Reinheit der $CaCl_2$-Lösung gewährleistet ist. Alle diese Umsetzungen und Reinigungen werden mit Vorteil in schwach salzsaurem Milieu und bei Temperaturen zwischen 60 und 70° C und die FeO(OH)-Fällung bei einer Temperatur zwischen 60 und 80° C vorgenommen.

Es wird erfindungsgemäß ein Verfahren geschaffen, bei welchem die Chemikalien weitgehend im Kreislauf geführt werden können, wobei insgesamt nur gebrannter Kalk oder $CaCO_3$, welche ein relativ billiges Ausgangsmaterial darstellen, dem Verfahren kontinuierlich zuzuführen sind.

Der erfindungsgemäße Verfahrensablauf ermöglicht somit die Umsetzung von Eisen-II-Sulfatheptahydrat mit gebranntem Kalk so zu steuern, daß dabei die gewünschten Endprodukte, Eisenoxid und Gips ($CaSO_4 \cdot 2\,H_2O$), getrennt nebeneinander hergestellt werden, wobei die für die Umsetzungen erforderliche Kalziumchloridlösung innerhalb des Prozesses regeneriert wird.

Das erfindungsgemäße Verfahren ist in dem in der Zeichnung dargestellten Blockdiagramm zusammengefaßt und läuft im wesentlichen wie folgt ab.

Eisen-II-Sulfat-heptahydrat wird, so wie es aus den Siebschleudern ausgeworfen wird, in einen Rührbehälter eingebracht, in welchem sich eine schwach salzsaure, eisenhaltige $CaCl_2$-Lösung befindet. Aus dem eingebrachten Heptahydrat bildet sich in der wäßrigen Phase entsprechend Reaktionsgleichungen (1) Gips und Eisen-II-Chlorid.

$$FeSO_4 \cdot 7\,H_2O + CaCl_2 \longrightarrow CaSO_4 \cdot 2\,H_2O + FeCl_2 + 5\,H_2O \qquad (1)$$

Die Fällungsreaktion erfolgt unter ständigem Rühren im Temperaturbereich zwischen 60 und 70° C. Die Zufuhr von Heptahydrat wird noch vor der restlosen Umsetzung des in der Lösung vorhandenen Kalziumchlorids gestoppt.

Der erhaltene Rohgips ist für technische Zwecke noch nicht rein genug und muß daher durch Umkristallisieren in einer eisenfreien $CaCl_2$-Lösung gereinigt werden.

Dazu saugt man die über dem Gips befindliche $CaCl_2$-haltige $FeCl_2$-Lösung ab, versetzt den trockengesaugten Gips mit einer ausreichenden Menge einer schwach HCl-sauren eisenfreien $CaCl_2$-Lösung von 60–70° C und rührt diese Suspension während einer halben Stunde. Der auf diese Weise erhältliche Reingips enthält nur mehr Spuren von Eisen und verändert sein Aussehen auch beim Erhitzen nicht mehr.

Die bei der Abtrennung des Reingipses erhältliche schwach Eisen-II-chloridhaltige $CaCl_2$-Lösung wird für die folgende Rohgipsfällung herangezogen.

Die nach der Rohgipsfällung erhaltene, schwach HCl-saure und überschüssiges $CaCl_2$ enthaltende $FeCl_2$-Lösung wird mit gebranntem Kalk versetzt. Hierbei flockt entsprechend Reaktionsgleichung (2) zunächst $Fe(OH)_2$ aus, das aber in Gegenwart von Luftsauerstoff entsprechend Reaktionsgleichung (3) unter Bildung von FeO(OH) weiter reagiert.

Die Summenreaktion verläuft entsprechend Reaktionsgleichung (4).

$$FeCl_2 + CaO + H_2O \longrightarrow Fe\,(OH)_2 + CaCl_2 \quad (2)$$

$$Fe\,(OH)_2 + 1/4\ O_2 \longrightarrow FeO\,(OH) + 1/2\ H_2O \quad (3)$$

$$FeCl_2 + CaO + 1/2\ H_2O + 1/4\ O_2 \longrightarrow FeO\,(OH) + CaCl_2 \quad (4)$$

Da die Oxydation von $Fe(OH)_2$ zu $FeO(OH)$ beim Einblasen von Luft mit fortschreitendem Umsetzungsgrad immer schleppender vor sich geht, setzt man dem Luftstrom kleine Chlormengen zu, die eine rasche Vervollständigung der Oxydation bewirken. Der Chlorzusatz dient daneben noch der Deckung der $CaCl_2$-Verluste, die sich beim Austragen von Gips und $FeO(OH)$ aus $CaCl_2$-haltigen Lösungen ergeben.

Die Ausfällung des Eisenoxydhydrates erfolgt ebenfalls unter ständigem Rühren im Temperaturbereich zwischen 60 und 80°C. Das ausgefällte Eisenoxydhydrat, das stets noch kleine Mengen an überschüssigem $Ca(OH)_2$ enthält, wird von der eisenfreien $CaCl_2$-Lösung durch Filtration abgetrennt und trockengesaugt. Das auf diese Weise erhaltene $FeO(OH)$ ist infolge des niedrigen Schwefelgehaltes, der je nach der Reinheit des verwendeten Kalkes zwischen 0,1 und 0,3% liegt, ein für die Herstellung von Sinter-Eisenoxid geeigneter Zusatzrohstoff. Die bei der Abtrennung des Eisenoxydhydrates erhältliche eisenfreie $CaCl_2$-Lösung dient wieder zur Reinigung von Rohgips.

Der beschriebene chemiche Aufarbeitungsprozeß von Eisen-II-Sulfat-heptahydrat ist, wie dem in der Zeichnung dargestellten Blockdiagramm zu entnehmen ist, sofflich in sich vollständig geschlossen. Es werden, abgesehen von den erwünschten Endprodukten, nämlich Eisenoxydhydrat und Gips, keine Nebenprodukte gebildet, die zu einer Umweltbelästigung führen können. Da sämtliche Reaktionen im Temperaturbereich zwischen 60 und 80°C ablaufen, und sämtliche verwendete Lösungen im Kreislauf geführt werden, ist der Energiebedarf minimal.

Bei Verwendung von $CaCO_3$, welcher in vorteilhafter Weise mit maximalen Korngrößen von 0,5 mm, insbesondere 0,1 mm eingesetzt wird, empfiehlt es sich, anstelle eines offenen Rührbehälters einen geschlossenen Autoklav zu verwenden. Mit Carbonatkalk setzt sich aber bekanntlich nur 3wertiges Eisen chemisch um; aus diesem Grunde ist es daher auch hier notwendig, das im Filtrat nach der Gipsausfällung erhaltene 2wertige Eisen zu 3wertigem aufzuoxydieren. Am einfachsten könnte man dies mit gasförmigem Chlor bewerkstelligen.

Chlor ist aber für diese Zwecke zu teuer und wird daher durch ein billigeres Oxydationsmittel, wie z. B. Reinsauerstoff, ersetzt werden. Die Oxydation verläuft dann entsprechend Gleichung (3)

$$2\ FeCl_2 + \frac{1}{2}\ O_2 + H_2O \longrightarrow 2\ Fe(OH)Cl_2 \quad (5)$$

Da sich Sauerstoff von 1 Atmosphäre in Wasser nur sehr langsam löst, ist damit die Bildung von basischem Eisen-III-chlorid und damit die Ausfällung von $FeO(OH)$ für ein technisches Verfahren zu langsam.

Wird Sauerstoff jedoch mit höheren Drücken, z. B. mit 11 bar, angewendet, dann erfolgt die Bildung von $FeO(OH)$, durch die höhere Sauerstofflöslichkeit bedingt, wesentlich rascher.

Die Umsetzung des nach Gleichung (5) gebildeten basischen Eisen-III-chlorids erfolgt entsprechend Gleichung (6).

$$2\ Fe(OH)Cl_2 + 4\ CaCO_3 + 2\ H_2O \longrightarrow 2\ FeO(OH) + 2\ CaCl_2 + 2\ Ca(HCO_3)_2 \quad (6)$$

Zur Durchführung der Druckoxydation entsprechend Gleichung (5) und der parallel dazu ablaufenden Ausfällung des 3wertigen Eisens als $FeO(OH)$ entsprechend Gleichung (6) ist es allerdings notwendig, den offenen Rührreaktor durch einen geschlossenen, druckfesten zu ersetzen.

Die Umsetzung entsprechend Gleichung (6) erfolgt in annähernd neutralem Medium und findet nur dann quantitativ statt, wenn das auszufällende Eisen als $Fe^{3+}$-Ion vorliegt.

Da das ausflockende Eisen-III-oxydhydrat nicht umgesetzte $CaCO_3$-Partikelchen einschließt, setzt sich das in Gegenwart von überschüssigem Carbonatkalk ausgefällte Eisen-III-oxydhydrat rascher zu Boden als ein $FeO(OH)$-Niederschlag, der mit der stöchiometrischen Carbonatkalkmenge ausgefällt wurde. Es wird somit auch hier Kalziumkarbonat in überstöchiometrischer Menge zugesetzt.

**Patentansprüche**

1. Verfahren zur Aufarbeitung von Eisen-II-Sulfat-heptahydrat durch Umsetzung mit $CaCl_2$ zu Rohgips, bei welchem die nach der Fällung des Rohgipses erhaltene schwach HCl-saure,

überschüssiges $CaCl_2$ enthaltende $FeCl_2$-Lösung im Anschluß an die Fällung des Rohgipses mit gebranntem Kalk oder $CaCO_3$ versetzt wird, worauf mittels gasförmigem Sauerstoff, insbesondere Luft, Fe II zumindest teilweise zu Fe III oxydiert wird, die ausgefallenen Eisenoxydhydrate abgetrennt und das gebildete $CaCl_2$ im Kreislauf geführt wird, dadurch gekennzeichnet, daß die nach dem Ausfällen von FeO(OH) weitgehend eisenfreie $CaCl_2$-Lösung abgetrennt wird und der Rohgips durch Versetzen mit dieser eisenfreien $CaCl_2$-Lösung gereinigt wird und daß die nach der Reinigung des Rohgipses Fe-II-chloridhaltige $CaCl_2$-Lösung zur Rohgipsfällung eingesetzt wird.

2. Verfahren nach Anspruch 1, dadurch gekennzeichnet, daß bei Verwendung von $CaCO_3$ Sauerstoff unter Druck, insbesondere unter 8 bis 12 bar, vorzugsweise 10 bar, eingepreßt wird.

3. Verfahren nach Anspruch 1 oder 2, dadurch gekennzeichnet, daß $CaCO_3$ mit einer Korngröße von maximal 0,5, vorzugsweise maximal 0,1 mm, eingesetzt wird.

4. Verfahren nach Anspruch 1, 2 oder 3, dadurch gekennzeichnet, daß dem Luft- oder Sauerstoffstrom Chlor zugesetzt wird.

5. Verfahren nach einem der Ansprüche 1 bis 4, dadurch gekennzeichnet, daß nach dem Zusatz von gebranntem Kalk oder $CaCO_3$ Luft bzw. Sauerstoff in einer Menge eingeblasen wird, mit welcher 70 bis 90%, vorzugsweise 70 bis 80%, des Eisen II zu Eisen III oxydiert wird.

6. Verfahren nach einem der Ansprüche 1 bis 5, dadurch gekennzeichnet, daß die Umsetzung und gegebenenfalls die Umkristallisation in schwach HCl-saurem Milieu durchgeführt wird.

7. Verfahren nach einem der Ansprüche 1 bis 6, dadurch gekennzeichnet, daß zur Oxydation von $Fe(OH)_2$ zu FeO(OH) dem Luftstrom Chlor in einer Menge beigefügt wird, welche neben der Vervollständigung der Oxydation zur Deckung der $CaCl_2$-Verluste beim Austragen von Gips und FeO(OH) aus den $CaCl_2$-haltigen Lösungen ausreicht.

8. Verfahren nach einem der Ansprüche 1 bis 7, dadurch gekennzeichnet, daß die Gipsfällung, die Reinigung des Rohgipses und die FeO(OH)-Fällung bei erhöhter Temperatur durchgeführt werden.

9. Verfahren nach Anspruch 8, dadurch gekennzeichnet, daß die Gipsfällung und die Umkristallisation bei Temperaturen zwischen 60 und 70°C und die FeO(OH)-Fällung bei einer Temperatur zwischen 60 und 80°C vorgenommen werden.

## Claims

1. Process for the working up of ferrous II sulphate heptahydrate by reaction with $CaCl_2$ into raw gypsum in which the slightly hydrochloric $FeCl_2$-solution containing excessive $CaCl_2$ and obtained after precipitating the raw gypsum is mixed with burnt limestone or $CaCO_3$ after precipitating the raw gypsum, whereupon Fe II is, at least partly, oxidized into Fe III by means of gaseous oxygen, particularly air, the precipitated iron oxide hydrates are separated and the produced $CaCl_2$ is recirculated, characterized in that the $CaCl_2$-solution, which is mostly free of iron after precipitating FeO(OH), is separated and that the raw gypsum is purified by adding thereto this $CaCl_2$-solution free of iron and that the $CaCl_2$-solution, which contains Fe-II-chlorides after purifying the raw gypsum, is used in the precipitation of the raw gypsum.

2. Process according to claim 1, characterized in that, when using $CaCO_3$, oxygen is injected under pressure, in particular at a pressure of 8 to 12 bars, preferably 10 bars.

3. Process according to claims 1 or 2, characterized in that $CaCO_3$ is used at a maximum grain size of 0.5, preferably a maximum of 0.1 mm.

4. Process according to claims 1, 2 or 3, characterized in that chlorine is added to the air or oxygen flow.

5. Process according to any of claims 1 to 4, characterized in that, after adding burnt limestone or $CaCO_3$, air or oxygen is injected at an amount by which 70 to 90 percent, preferably 70 to 80 percent, of Fe II is oxidized into Fe III.

6. Process according to any of claims 1 to 5, characterized in that the reaction and optionally the recrystallization is effected in a slightly hydrochloric environment.

7. Process according to any of claims 1 to 6, characterized in that, for oxidizing $Fe(OH)_2$ into FeO(OH), chlorine is added to the air flow in an amount sufficient to complete the oxidation and to make up for the losses of $CaCl_2$ occurring while removing gypsum and FeO(OH) form the solutions containing $CaCl_2$.

8. Process according to any of claims 1 to 7, characterized in that the precipitation of gypsum, the purification of raw gypsum and the precipitation of FeO(OH) take place at an elevated temperature.

9. Process according to claim 8, characterized in that the precipitation of gypsum and the recrystallization are carried out at a temperature between 60 and 70 degrees centigrade and the precipitation of FeO(OH) at a temperature between 60 and 80 degrees centigrade.

**Revendications**

1. Procédé de transformation du sulfate de fer II heptahydraté en gypse brut par réaction avec du $CaCl_2$, suivant lequel la solution de $FeCl_2$ chlorhydrique faiblement acide contenant du $CaCl_2$ en excès obtenue après précipitation du gypse brut est additionnée, après la précipitation du gypse brut, de chaux vive ou de $CaCO_3$, après quoi le Fe II est oxydé au moins partiellement en Fe III au moyen d'oxygène gazeux et en particulier d'air, l'oxyde de fer hydraté précipité est séparé et le $CaCl_2$ formé est ramené dans le circuit, caractérisé en ce que la solution de $CaCl_2$ sensiblement exempte de fer après la précipitation de FeO(OH) est recueillie etle gypse brut est purifié par addition de cette solution de $CaCl_2$ exempte de fer tandis que la solution de $CaCl_2$ contenant du chlorure de fer II après la purification du gypse brut est utilisée pour la précipitation du gypse brut.

2. Procédé suivant la revendication 1, caractérisé en ce que lors de l'utilisation de $CaCO_3$, on injecte de l'oxygène sous pression, en particulier de 8 à 12 bars et de préférence de 10 bars.

3. Procédé suivant la revendication 1 ou 2, caractérisé en ce qu'on utilise du $CaCO_3$ d'une granulométrie de 0,5 mm au maximum et de préférence de 0,1 mm au maximum.

4. Procédé suivant la revendication 1, 2 ou 3, caractérisé en ce qu'on ajoute du chlore au courant d'air ou d'oxygène.

5. Procédé suivant l'une quelconque des revendications 1 à 4, caractérisé en ce qu'après l'addition de la chaux vive ou du $CaCO_3$, on injecte de l'air ou de l'oxygène en une quantité au moyen de laquelle on oxyde 70 à 90% et de préférence 70 à 80% du fer II en fer III.

6. Procédé suivant l'une quelconque des revendications 1 à 5, caractérisé en ce qu'on exécute la conversion et éventuellement la recristallisation en mulieu chlorhydrique faiblement acide.

7. Procédé suivant l'une quelconque des revendications 1 à 6, caractérisé en ce que pour l'oxydation de $Fe(OH)_2$ en FeO(OH), on ajoute au courant d'air du chlore en une quantité qui suffit, outre à l'achèvement de l'oxydation aussi à la couverture des pertes de $CaCl_2$ dues à la séparation du gypse et du FeO(OH) hors des solutions contenant du $CaCl_2$.

8. Procédé suivant l'une quelconque des revendications 1 à 7, caractérisé en ce qu'on exécute la précipitation du gypse, la purification du gypse brut et la précipitation du FeO(OH) à température élevée.

9. Procédé suivant la revendication 8, caractérisé en ce qu'on exécute la précipitation du gypse et la recristallisation à des températures de 60 à 70°C et la précipitation du FeO(OH) à une température de 60 à 80°C.

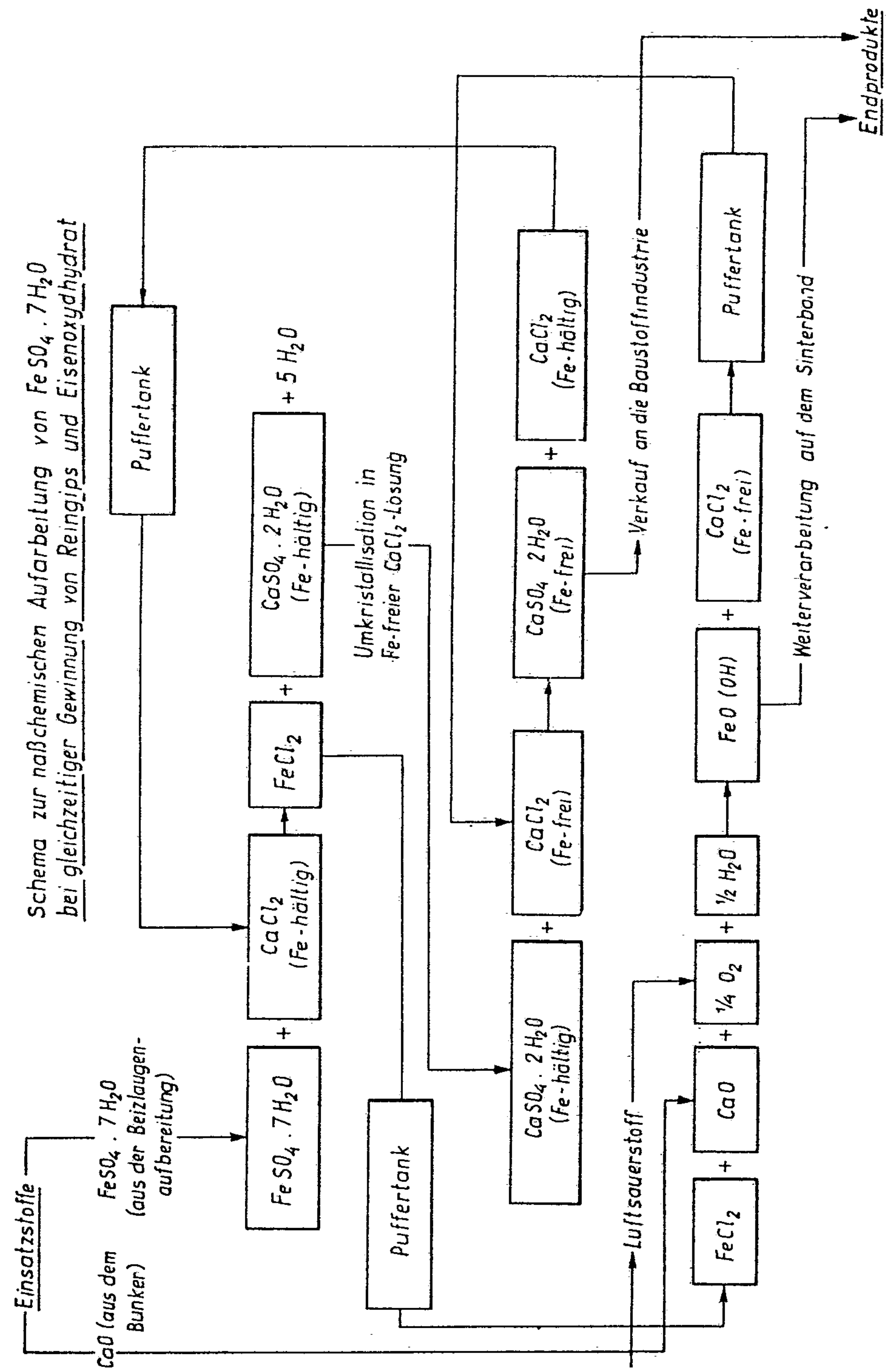

Schema zur naßchemischen Aufarbeitung von FeSO4 . 7H2O
bei gleichzeitiger Gewinnung von Reingips und Eisenoxydhydrat
Einsatzstoffe
CaO (aus dem Bunker)
FeSO4 . 7H2O (aus der Beizlaugenaufbereitung)
FeSO4 . 7H2O
+
CaCl2 (Fe-hältig)
FeCl2
+
CaSO4 . 2H2O (Fe-hältig)
+ 5 H2O
Puffertank
Puffertank
Umkristallisation in Fe-freier CaCl2-Lösung
CaSO4 . 2H2O (Fe-hältig)
+
CaCl2 (Fe-frei)
CaSO4 . 2H2O (Fe-frei)
+
CaCl2 (Fe-hältig)
Verkauf an die Baustoffindustrie
Luftsauerstoff
FeCl2
+
CaO
+
1/4 O2
+
1/2 H2O
FeO (OH)
+
CaCl2 (Fe-frei)
Puffertank
Weiterverarbeitung auf dem Sinterband
Endprodukte